# EUROPEAN PATENT APPLICATION

(11) **EP 1 582 442 A2**
(43) Date of publication of application: **05.10.2005**
(21) Application number: 05102605.2
(22) Date of filing: 01.04.2005
(51) Int. Cl.: B62D 33/023

(54) **Transport vehicle load compartment door leaf and a leaf supply kit**

(30) Priority: 02.04.2004 IT MI20040667
(71) Applicant: Autocar S.p.A., 20129 Milano (IT)
(72) Inventor: Lavazza, Marco, 20060 Gessate (IT)
(74) Representative: Borsano, Corrado

(57) **Abstract**

According to the invention, the transport vehicle load compartment door leaf comprises several panelling sections (2, 2', 2") arranged basically lengthwise to the leaf, placed side by side and fitted into each other so as to form the panelled part of the leaf. In at least one part of the leaf, the panelling sections extend for the full width of the leaf.

The invention also refers to the leaf shipment and supply kit.

## Description

### Field of the invention

This invention refers to a door leaf for the load compartment of an industrial and commercial transport vehicle such as, for example, a truck or trailer and the supply kit with which such door can be furnished to the coachbuilder who equips the aforesaid transport vehicle.

### Prior art

At the moment, truck or trailer load compartment doors are constructed in some cases by assembling side by side a considerable number - approximately 15 to 20, as the load compartment doors of the trucks are, at least on the Italian market, of standard width, for example 2200 mm or 2550 mm - of light alloy sections with generally box-shaped cross-section so as to form the panel part of the door.

A reinforcement and restraint frame, also often of light alloy, is riveted around the panel formed in this way

As door height is not standardized, these are still produced using artisan methods, each single door is produced to order according to the customer's specific requests.

The coachbuilder assembles the door using, generally, commercial light alloy box sections, cuts these to the size required, drills the holes necessary to rivet the frame to the panel obtained fitting the box type sections together.

This invention proposes to simplify and accelerate assembly of a transport vehicle load compartment door leaf whose panelled portion is obtained assembling several sections.

### Summary of the invention

In a first embodiment of this invention, this purpose is achieved with a transport vehicle load compartment door leaf, said leaf comprising a number of panelling sections arranged basically lengthwise to the leaf and placed side by side and fastened together to form the panelled part of the leaf where, in at least one part of the leaf, the panelling sections extend for the full width of the leaf.

In a second embodiment of this invention, such purpose is achieved with a kit for supply of a leaf as defined above, such kit comprising a number of such panelling sections to be assembled where such panelling sections are placed side by side and fitted into each other so as to form at least part of the panelled section of such leaf.

These and further purposes are achieved by a transport vehicle load compartment door leaf and a leaf supply kit according to the attached claims, which are considered an integral part of the present description.

The following detailed description of a particular non limitative embodiment will make the advantages of this invention clearer to a person skilled in the art, referring to the following figures:

### List of figures

Figure 1 is a schematic representation of a prospect view of a door leaf for the load compartment of a truck, according to a particular embodiment of this invention;
Figure 2 is a schematic representation of a cross-section in the plane A-A of the leaf of Figure 1;
Figures 3A, 3B, 3C are schematic representations of the cross-sections, in the plane A-A, of each of the panelling sections forming the leaf of Figure 1;
Figure 4 is a schematic representation of a detailed section of the snap-in system used to join the panelling sections of the leaf of Figure 1.

### Detailed description

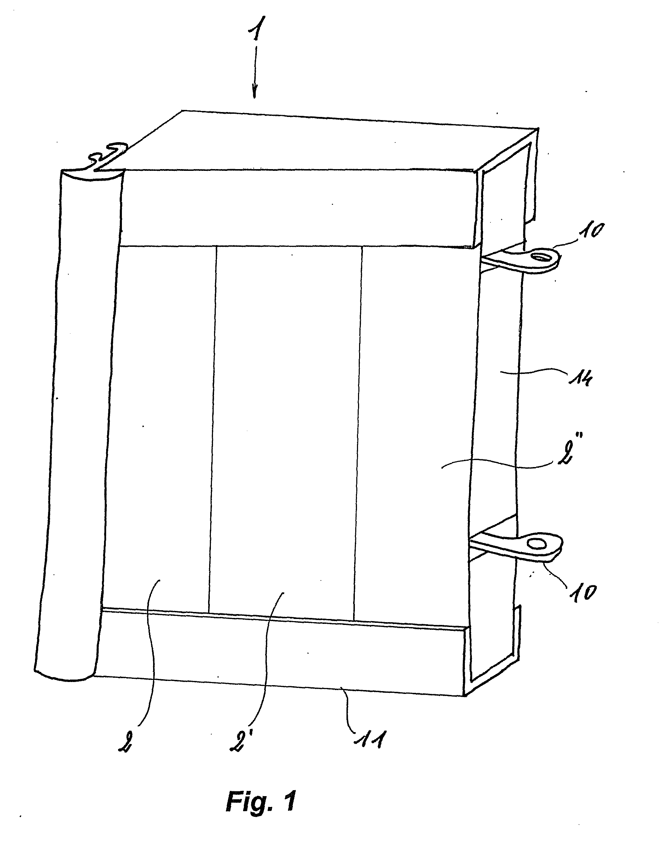

Figure 1 is a schematic representation of a transport vehicle load compartment door leaf according to a particular embodiment of this invention; such leaf, identified generally by reference 1, includes a number of extruded sections 2 made of light alloy, for example aluminium alloy, placed side by side and fitted together using suitable means of fastening - shown in Figure 4 - so as to form the central panel type body of the leaf 1.

Each of these sections 2, referred to below as panelling sections 2, includes the inner walls with the function of assuring bending and compression resistance; the inner walls, together with the other walls of the section, form a box type structure with prismatic-shaped internal compartments - more in particular of parallelepiped shape - facing in the direction of drawing of the section.

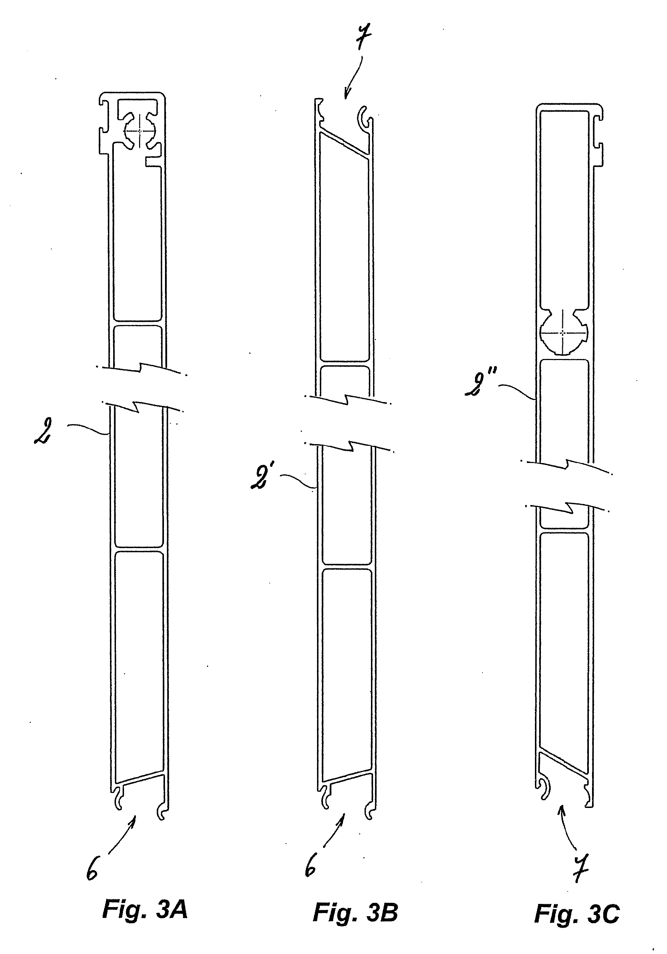

As can be seen more clearly in Figures 3A, 3B, 3C, panelling sections 2, 2', 2" have an oblong cross-section and - at least in certain parts of the sections - means of fastening 6, 7 are present on at least one of the two ends of the oblong cross-sections - on both ends of the oblong cross-sections in the case of the intermediate panelling sections 2'.

In the example of embodiment shown in the Figures, the first 6 and second means of fastening 7 consists of snap-in edges with the commercial name "TS series fittings", produced for example by the ALCOA company, the panel of the leaf of Figure 1 is assembled fitting the first means of fastening 6 of the section of panelling 2 into the second means of fastening 7 of the intermediate section of panelling 2'; the third section of panelling 2" is assembled fastening together means of fastening 7 with means of fastening 6 of the intermediate section of panelling 2'.

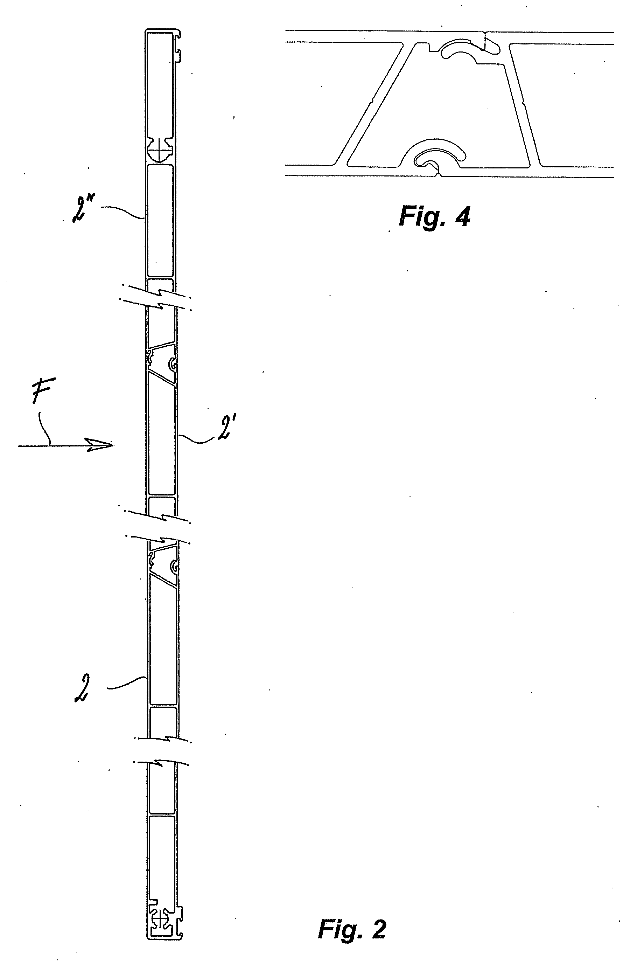

This type of fastening makes it possible to construct load compartment door leafs with a noteworthy resistance to penetration loads from inside the load compartment and greater resistance to penetration loads from the outside - in Figure 2 the arrow F indicates the direction of a penetration load from inside the load compartment.

Penetration loads from inside the load compartment usually occur when the load shifts or falls inside the load compartment because, for example, it is incorrectly positioned.

Generally such penetration loads are always characterized by a component normal to the plane of the leaf, when it is closed.

The means of fastening 6, 7 may be constructed in other ways with, for example, the snap-in sections described in patents DE 85 23 786 U (Gross Aluminium), EP 271 137 (ALCOA) and US 4 099 358 (Intercontinental Truck Body); In the ART, all these snap-in fasteners - as also the TS fastener indicated above - are usually called "snap-lock fasteners".

According to a first aspect of this invention, the panelling sections 2 that form the panel type central part of the leaf 1, at least in one part of the leaf for example the upper or lower part, extend basically for the entire length of the leaf. Preferably they are present - at least in such part - in a number of not more than five.

According to the embodiment of Figures 2, 3A-3C, the panelling sections 2, 2', 2" that form the panel type central part of the leaf 1 are present in a number of three; in the case of load compartment leafs that close a 2200-mm door opening, and in the case of two leafs of more or less the same width, this means that at least one of the panelling sections 2 has a width of, respectively, not less than approximately 150-220 mm and approximately 360-420 mm.

The considerably lower number of panelling sections 2 required to form at least part of the panelled part of the leaf - i.e. minus for example any openings, outlets or glazing - offers many advantages, some of which are outlined below:
- assembly of the leaf is simplified and much faster due to the lower number of panelling sections 2 to be fitted together and also the lower number of rivets (in the case in which the riveted sections of bracing frame 11 are present);
- in the case for example of panelling sections 2 joined with "TS" type snap-lock systems, the leaf is generally of lighter weight as the heavier parts of a section of this type are generally the snap-in areas;
- as it has a lower number of snap-in connections, the leaf is less labile and sturdier, in particular as regards penetration resistance - for example in the case in which part of the load falls or moves during transport and knocks against or presses against the leafs from the inside towards the outside of the load compartment;
- it is easier to construct an attractively-designed door;
- it is easier and more cost-effective to cut and machine the sections using longer extruded sections on highly-automated cutting, milling, drilling centres; in turn, machining on an automatic machining centre makes it possible to obtain higher precision and improved quality of the finished door, reduces rejects and promotes more uniform production quality;
- it is easier and more economic to package, handle and transport the various disassembled elements of the door as an assembly kit; in particular, the packaging of the kit may be of particularly compact size, thereby facilitating storage: consider for example a kit with two leafs each consisting of three panelling sections with an approximate width of 360-420 mm, with the various panelling sections stacked one on top of the other.

Preferably, at least one of the panelling sections 2 that form a leaf according to the present invention has a width of not less than approximately 20 cm; even more preferably, at least one of the panelling sections 2 has a width of not less than approximately 30 cm; even more preferably one of the panelling sections 2 has a width of not less than approximately 40-45 cm.

The leaf 1 of the example of construction of Figure 1 also comprises two sections of bracing frame 11, designed to stiffen the leaf 1 against bending 1 and consisting basically of a C section of suitable light alloy; the width of the concave part of the C-shaped frame is slightly higher than the thickness of the panelling sections 2 so that the ends of these can be inserted when they are fastened together as in Figure 1.

The sections of bracing frame 11 also plug the open ends of the internal compartments of the box sections 2 and also block and contain such sections; such sections 11 can be fastened to the panelling sections 2 for example through riveting.

Preferably, two sections of the bracing frame 11 are fastened to each leaf at the lower and upper sides of the leaf - i.e. the two heads of the panelling sections 2 - while the leaf is basically without any further sections of bracing frame arranged lengthwise to the panelling sections 2 so as to further lighten the leaf and to further simplify assembly.

The leaf 1 of the example of construction of Figure 1 also includes the mobile parts of two or more hinges 10 - i.e. the parts of the hinges that are integral with the leaf - designed to fasten the leaf 1 to the angle irons of the door of the vehicle load compartment.

A second aspect of this invention refers to the supply kit of a leaf according to the first aspect of this invention.

This supply kit may contain:
- a number (preferably comprised between three and seven) of the aforesaid panelling sections 2, 2', 2" - in the case of a single leaf kit - disassembled, where such panelling sections are designed to fit into each so as to form at least part of the panel type central portion of such leaf and, for example, in certain cases of leafs without openings or windows, are cut basically to the length they will have in the assembled leaf;
- at least one of the aforesaid sections of bracing frame 11, where the aforesaid panelling sections 2 and the sections of bracing frame 11, when fitted together, make it possible to assemble a leaf 1 as described above or in any case according to the first aspect of this invention.

The assembly kit may also contain all and everything required by the coachbuilder to assemble the leaf - gaskets, hinges, other sections - who does not therefore have to waste time procuring the various materials and small parts and possibly cutting these to size.

Advantageously, the company that supplies the kit may furnish the sections of frame 11 already punched or with indications for drilling at the points where the rivets are to be inserted.

A kit of this type has advantages for whoever produces or sells it and for the coachbuilder who buys and uses it to assemble the complete transport vehicle. The company that produces and supplies the kit also benefits from the aforementioned advantages when producing the leafs, in particular
- the possibility cutting the panelling sections and frames 11 on automatic machining centres and also of carrying out other types of machining such as for example drilling of holes for the rivets or milling, on automatic machining centres, with much higher precision, productivity and repeatability than in the case of manual processes, and
- the limited space occupied by the kit during transport to the customer.
- Other benefits for the coachbuilder who buys and uses the kit are as follows:

- assembly of a very reduced number of components compared with known type load compartment doors, with a consequent considerable reduction in assembly times;
- a further reduction in assembly times due to the fact that the coachbuilder receives the parts already cut, drilled and milled to size and must therefore only carry out relatively easy assembly operations such as for example snap-in and riveting.

Advantageously, the hinges for fastening to the pivot of the angle iron, or their mobile parts 10 in the kit are provided already fitted on the destination panelling section 2 thereby considerably simplifying measurement and tracing by the coachbuilder to fasten the door to the pivot of the load compartment.

The embodiment described previously permits various modifications and variants without overstepping the scope of the invention: for example the panelling sections 2 can be fitted together with different "Snap Lock" systems from those described and illustrated, or even with systems not of the "Snap Lock" type; other forms of preferred embodiment of a door leaf according to this invention may include not more than four panelling sections.

Any modification or variant within the meaning and field of application of the claims is intended as included therein.

## Claims

1. Transport vehicle load compartment door leaf, said leaf comprising a plurality of panelling sections arranged basically in a lengthwise direction to the leaf, and placed side by side and fastened together to form at least part of the panelled part of said leaf where in at least one part of said leaf said panelling sections extend basically for the entire width of the leaf.

2. Door leaf according to claim 1, **characterised in that** said panelling sections basically form the entire panelled part of the leaf and extend basically for the entire width thereof.

3. Door leaf according to claim 1 or 2, **characterised in that** it comprises not more than five of said panelling sections fitted side by side and fastened together.

4. Door leaf according to one or more claims from 1 to 3, **characterised in that** it comprises at least one section of perimeter bracing frame fastened at one of the two heads of said plurality of panelling sections and crosswise to said panelling sections so as to assure bending resistance of said leaf.

5. Door leaf according to claim 4, **characterised in that** said bracing frame has a basically C-shaped cross-section able to accommodate the ends of said panelling sections placed side by side and fastened together.

6. Door leaf according to claim 4 or 5, **characterised in that** it comprises two of said sections of bracing frame fastened on two opposite edges of said leaf, and basically without bracing frame sections running lengthwise to said panelling sections.

7. Door leaf according to one or more claims from 1 to 6, **characterised in that** at least one of said panelling sections has a width of not less than approximately 20 cm.

8. Door leaf according to claim 7, **characterised in that** at least one of said panelling sections has a width of not less than approximately 30 cm.

9. Door leaf according to claim 8, **characterised in that** at least one of said panelling sections has a width of not less than approximately 450 cm.

10. Door leaf according to one or more claims from 1 to 9, **characterised in that** at least two of said panelling sections each have one or more lengthwise edges that make it possible to join said panelling sections with one or more snap-in fasteners.

11. Door leaf according to claim 10, **characterised in that** one or more of said snap-in fasteners are reversible and can be joined and separated several times.

12. Door leaf according to claim 10 or 11, **characterised in that** one or more of said snap-in fasteners are designed to make said door leaf more resistant to penetration loads in a normal direction to the leaf itself than to penetration loads in the opposite direction to said normal direction.

13. Kit for the supply of a leaf with characteristics according to one or more claims from 1 a 12, said kit comprising a plurality of said panelling sections to be assembled, being said panelling sections designed to be placed side by side and fitted into each other so as to form at least part of the panelled part of said leaf.

14. Kit according to claim 13, **characterised in that** it comprises at least one of said sections of bracing frame, said panelling sections and at least one said section of bracing frame being assembled together so as to form a leaf according to one or more claims from 4 a 12.

15. Kit according to claim 14, **characterised in that** at least one said section of bracing frame and said panelling sections are **characterised by** a plurality of holes in which it is possible to insert rivets and/or screws to fasten said sections of bracing frame to said panelling sections to assemble said leaf.

16. Kit according to according to one or more claims from 13 to 15, **characterised in that** it comprises at least the mobile parts of the hinges for fastening of said leaf to the angle iron of said load compartment of the transport vehicle, said mobile parts of the fastening hinges being obtained in or fastened to one of said panelling sections.
